(19) Europäisches Patentamt
European Patent Office
Office européen des brevets

(11) **EP 1 387 618 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(21) Anmeldenummer: **02753045.0**

(22) Anmeldetag: **07.05.2002**

(51) Int Cl.:
***A22C 5/00*** *(2006.01)*

(86) Internationale Anmeldenummer:
**PCT/EP2002/005022**

(87) Internationale Veröffentlichungsnummer:
**WO 2002/089590 (14.11.2002 Gazette 2002/46)**

(54) **FLEISCHVERARBEITUNGSMASCHINE MIT FETTANALYSEVORRICHTUNG**

MEAT PROCESSING MACHINE COMPRISING A FAT ANALYSING DEVICE

MACHINE DE TRAITEMENT DE VIANDE COMPORTANT UN DISPOSITIF D'ANALYSE DES GRAISSES

(84) Benannte Vertragsstaaten:
**AT BE CH CY DE DK ES FI FR GB GR IE IT LI LU MC NL PT SE TR**

(30) Priorität: **07.05.2001 DE 10122014**

(43) Veröffentlichungstag der Anmeldung:
**11.02.2004 Patentblatt 2004/07**

(73) Patentinhaber: **Convenience Food Systems Wallau GmbH & Co.KG**
**35216 Biedenkopf Wallau (DE)**

(72) Erfinder:
• **LINN, Stefan**
**65594 Runkel (DE)**

• **ESCHENRÖDER, Willi**
**35216 Biedenkopf-Wallau (DE)**
• **EVERS, Dieter**
**75334 Straubenhardt (DE)**
• **BERNHARDT,Jürgen**
**35216 Biedenkopf-Weifenbach (DE)**

(74) Vertreter: **Wolff, Felix et al**
**Kutzenberger & Wolff**
**Theodor-Heuss-Ring 23**
**50668 Köln (DE)**

(56) Entgegenhaltungen:
WO-A-95/28088          US-A- 3 735 247
US-A- 4 429 836          US-A- 5 324 228
US-A- 5 858 795

EP 1 387 618 B1

**Beschreibung**

Die vorliegende Erfindung betrifft eine Fleischverarbeitungsmaschine, mit der frisches und/oder gefrorenes Fleisch zerkleinert, abgefüllt, entgast und/oder gemischt wird und die eine Fettanalysevorrichtung zur Bestimmung des Fettgehaltes im Fleisch aufweist. Eine solche Maschine ist aus der US 4429836 bekannt.

Da Fleischprodukte heutzutage einen bestimmten Fettgehalt nicht überschreiten dürfen, spielt eine genaue Fettanalyse von Fleisch und eine exakte Einstellung von bestimmten Fettgehalten bei Fleischprodukten eine immer größere Rolle. Die Analyse des Fettgehaltes von Fleisch erfolgt derzeit oftmals diskontinuierlich durch Entnahme einer Fleischprobe aus einem Mischer oder von einem Förderband, die dann in einem Labor analysiert wird. Teilweise erfolgt die Fettanalyse auch schon kontinuierlich, indem beispielsweise der Fettgehalt von Fleisch auf einem Förderband mit einem Sensor bestimmt wird. Diese Messungen haben jedoch den Nachteil, daß der Massestrom des Fleisches absolut konstant sein muß und daß die Messung in einem Rohr stattfindet, was in der Regel für die Fleisch verarbeitende Industrie nicht akzeptabel ist, weil das Fleisch bei dieser Messung verschmiert. Darüber hinaus ist mit diesem Verfahren die Fettanalyse bei gefrorenem Fleisch nicht oder nur eingeschränkt möglich.

Es stellt sich deshalb die Aufgabe, eine Vorrichtung und ein Verfahren zur kontinuierlichen Bestimmung des Fettgehaltes von Fleisch zur Verfügung zu stellen, die die Nachteile des Standes der Technik nicht aufweisen.

Gelöst wird die Aufgabe erfindungsgemäß durch eine Fleischverarbeitungsmaschine, mit der frisches und/oder gefrorenes Fleisch zerkleinert, abgefüllt, entgast und/oder gemischt wird und die eine Fettanalysevorrichtung zur Bestimmung des Fettgehaltes im Fleisch aufweist.

Es war für den Fachmann überaus erstaunlich, daß es möglich ist eine Fettanalysevorrichtung in eine Fleischverarbeitungsmaschine zu integrieren. Die erfindungsgemäßen Vorrichtungen haben den Vorteil, daß Fleischverarbeitung und die Fettanalyse in einer Vorrichtung stattfinden. Es herrschen eindeutig definierte Meßbedingungen. Eine Fleischvolumenstrombestimmung und/oder Fleischmassenstrom ist in der Fleischverarbeitungsmaschine sehr einfach möglich und die Fettanalyse und die Fleischvolumenstrom- bzw. Fleischmassenstrombestimmung ist in der erfindungsgemäßen Vorrichtung sehr genau.

Erfindungsgemäß ist die Fettanalysevorrichtung in die Fleischverarbeitungsmaschine integriert. Eine Fleischverarbeitungsmaschine im Sinne der Erfindung ist jede dem Fachmann bekannte Fleischverarbeitungsmaschine, mit der Fleisch zerkleinert, gemischt, entgast und/oder abgefüllt wird. Vorzugsweise ist die Fleischverarbeitungsmaschine jedoch ein Mischer, eine Füllmaschine oder eine Zerkleinerungsmaschine, insbesondere ein Wolf.

Als Fettanalysemittel kommt jedes dem Fachmann geläufige Fettanalysemittel in Frage. Vorzugsweise weist das Fettanalysemittel jedoch eine Strahlungsquelle mit vorzugsweise mehreren Energiestufen und einen Strahlungsdetektor auf. In einer ganz besonders bevorzugten Ausführungsform ist die Strahlungsquelle eine Röntgenquelle und der Strahlungsdetektor ein Röntgendetektor. Ebenfalls bevorzugt ist als Strahlungsquelle eine Infrarotquelle und als Strahlungsdetektor ein Infrarotdetektor.

Bei der Fettanalyse mittels Röntgendetektor wird die Abschwächung des Röntgenstrahls vorzugsweise in einem Energiebereich zwischen 18 und 45 keV gemessen. Vorzugsweise beträgt der Abstand zwischen Röntgenquelle und dem Röntgendetektor 20 bis 300 mm, besonders bevorzugt 50 bis 100 mm. Die Berechnung des Fettgehaltes sowie die Steuerung der Röntgenquelle erfolgt durch einen Mikroprozessor oder Speicher-programmierbare-Steuerung (SPS-Steuerung).

Ebenfalls bevorzugt erfolgt die Fettanalyse mit Near Infrared Reflection (NIR) oder mit Near Infrared Transmission (NIT).

Die Fettanalyse kann an jeder Stelle der Fleischverarbeitungsmaschine erfolgen, bei der die Meßstrecke zumindest zeitweise nicht von sich bewegenden Teilen, insbesondere Metallteilen unterbrochen wird.

Oftmals weisen die Fleischverarbeitungsmaschinen Förderaggregate, beispielsweise Förderschnecken, und ein Zerkleinerungsaggregat auf, wobei das Förderaggregat das Fleisch durch das Zerkleinerungsaggregat preßt. Die Fettanalyse erfolgt dann bevorzugt im Bereich der Förderaggregates, wobei bei dieser Konstellation insbesondere darauf zu achten ist, die Meßstrecke zumindest zeitweise nicht von sich bewegenden Teilen, insbesondere Metallteilen unterbrochen wird. Ebenfalls bevorzugt kann die Fettanalyse auch in einem Bereich zwischen Förderaggregat und Zerkleinerungsaggregat erfolgen. Weiterhin bevorzugt erfolgt die Fettanalyse im Bereich der Zerkleinerung oder in dem Bereich, der der Zerkleinerung nachfolgt. Diese bevorzugten Ausführungsformen haben den Vorteil, daß durch eine einfache Geschwindigkeitsmessung der Fleischvolumenstrom bestimmt werden kann.

In einer bevorzugten Ausführungsform weist das Zerkleinerungsaggregat mindestens einen Vorschneider und/oder mindestens eine Lochscheibe auf. In diesem Fall erfolgt die Messung vorzugsweise im Bereich des Vorschneiders und/oder Lochscheibe. Eine solche Lochscheibe bzw. ein solcher Vorschneider weist Ausnehmungen auf und die Meßstrecke ist dann beispielsweise in einer solchen Ausnehmung angeordnet.

Die Messung des Fettgehaltes kann an jeder Stelle in der Fleischverarbeitungsmaschine erfolgen. Vorzugsweise wird die Messung jedoch an einer Stelle durchgeführt, an der das Fleisch schon etwas komprimiert worden ist. Besonders bevorzugt beträgt der Überdruck an der Meßstelle mindesten 0,5 Bar, ganz besonders bevorzugt mindestens 1 Bar.

In einer anderen bevorzugten Ausführungsform der vorliegenden Erfindung weisen die Fleischstücke zum Zeitpunkt der Messung maximal noch eine Kantenlänge von 80 mm, vorzugsweise maximal 60 mm auf.

Vorteilhafterweise weist die erfindungsgemäße Fleischverarbeitungsmaschine zusätzlich eine Geschwindigkeitsmessung auf, so daß neben dem Fettgehalt auch der Volumenstrom des Fleisches bestimmt werden kann. Die Messung des Volumenstroms in der erfindungsgemäßen Fleischverarbeitungsmaschine erfolgt vorteilhafterweise so, daß Lücken beispielsweise zwischen Fleischstücken erkannt und ausgeblendet werden.

Ganz besonders bevorzugt wird mit der Fettanalysevorrichtung gleichzeitig auch die Dichte des Fleisches bzw. dessen Flächengewicht bestimmt, so daß nicht nur der Volumenstrom sondern auch der Massestrom des Fleisches bestimmt werden kann.

In einer bevorzugten Ausführungsform des erfindungsgemäßen Verfahrens werden die Werte des Fettgehaltes und die Massenströme des Fleisches über einen Zeitraum von 1 bis 10, vorzugsweise 2 bis 4 Sekunden gemittelt.

Vorzugsweise werden sowohl die jeweiligen Fettkonzentrationen und die dazugehörigen Massenströme an eine zentrale Steuereinheit gesendet, die die jeweiligen Meßwerte speichert, analysiert und zur Berechnung von durchschnittlichen Fettgehalten beispielsweise in Mischern oder in gewissen Produkten heranzieht.

Vorzugsweise wird der durchschnittliche Fettgehalt des Fleisches im Mischer gemäß der folgenden Formel berechnet:

$$\frac{(\text{Fettgehalt \%}_1 \cdot \text{Gewicht}_1 + \text{Fettgehalt \%}_2 \cdot \text{Gewicht}_2 + .... + \text{Fettgehalt \%}_n \cdot \text{Gewicht}_n)}{\sum_{i=1}^{n} \text{Gewicht}(n)}$$

Ein weiterer Gegenstand der vorliegenden Erfindung ist ein Verfahren zur Bestimmung des Fettgehaltes in einer Fleischverarbeitungsmaschine während der Verarbeitung.

Dieses Verfahren hat den Vorteil, daß durch die Analyse des Fettgehaltes des Fleisches kein Zeitverzug entsteht. Es müssen keine zusätzlichen Vorrichtungen zur Verfügung gestellt werden, mit denen der Fettgehalt des Fleisches bestimmt wird. Der Fettgehalt kann sowohl in frischem als auch in gefrorenen Fleisch bestimmt werden. Durch die Fettanalyse wird das Fleisch nicht geschädigt.

Vorzugsweise erfolgt die Fettanalyse während des Zerkleinerns, Mischens und/oder Abfüllens, vorzugsweise mit Röntgenstrahlen, NIR und/oder NIT.

In einer bevorzugten Ausführungsform des vorliegenden Verfahrens wird neben dem Fettgehalt des Fleisches auch dessen Dichte bzw. dessen Flächengewicht und dessen Fördergeschwindigkeit in der Verarbeitungsmaschine bestimmt.

Im folgenden wird die Erfindung anhand der **Figuren 1 - 8** erklärt. Diese Erklärungen sind lediglich beispielhaft und schränken den allgemeinen Erfindungsgedanken nicht ein.

**Figur 1** zeigt einen Winkelwolf mit einer Fettanalysevorrichtung.

**Figur 2** zeigt einen Einschneckenwolf.

**Figur 3** zeigt einen Wolf mit zwei versetzten Schnecken.

**Figur 4** zeigt einen Mischer mit angebauter Zerkleinerungsvorrichtung mit einer Fettanalysevorrichtung.

**Figur 5** zeigt eine Fettanalysevorrichtung im Bereich des Förderorgans.

**Figur 6** zeigt eine Fettanalysevorrichtung nach der Zerkleinerungsvorrichtung.

**Figur 7** zeigt eine Fettanalysevorrichtung im Bereich der Zerkleinerungsvorrichtung.

**Figur 8** zeigt eine Fettanalysevorrichtung im Bereich des Vorschneiders.

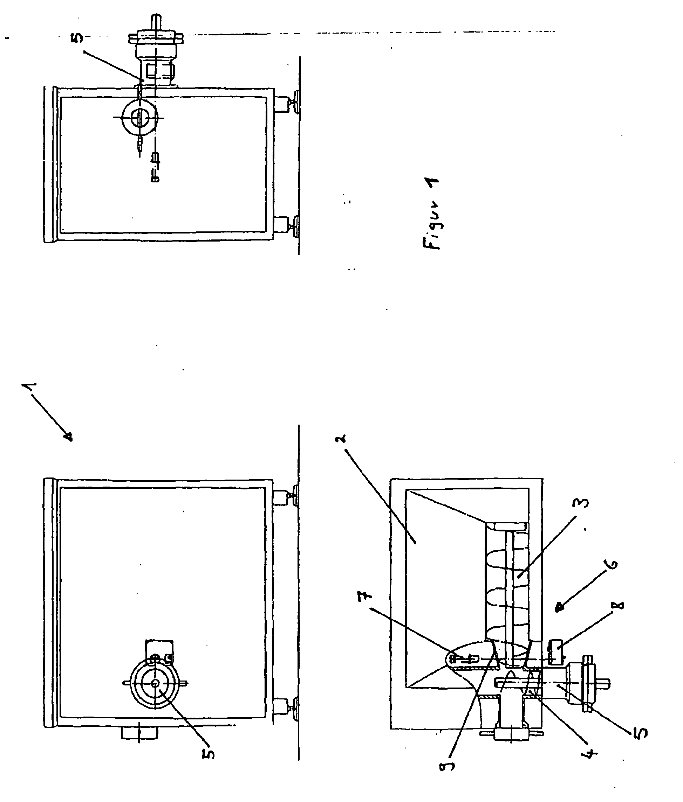

**Figur 1** zeigt einen Winkelwolf 1 in drei Ansichten. Das frische oder gefrorene Fleisch wird in den Trichter 2 geschüttet und mit der ersten und zweiten Schnecke 3, 4 zu dem Schneidsatz 5 gefördert, in dem das Fleisch zerkleinert wird. Die Fettanalysevorrichtung 6 ist im Bereich der ersten Schnecke 3 angeordnet und besteht aus einer Strahlungsquelle 7 und einem Strahlungsdetektor 8. Die Fettanalysevorrichtung basiert in dem vorliegenden Fall auf Röntgenstrahlung. Der Fachmann erkennt, daß auch andere Meßprinzipien eingesetzt werden können. Bei Fettanalysevorrichtungen im Bereich von bewegten Teilen ist wichtig, daß die Meßstrecke zum Zeitpunkt der Messung nicht unterbrochen ist bzw. wenn die Meßstrecke zum Zeitpunkt der Messung unterbrochen sein sollte, diese Meßwerte verworfen werden. Die Fettanalysevorrichtung ist im Bereich der ersten Schnecke so angeordnet, daß sichergestellt ist, daß alles Fleisch, das in den Wolf gefüllt wird, die Fettanalysevorrichtung passiert. Durch die Verengung des Querschnitts des Gehäuses 9 der Schnecke 3 ist außerdem sichergestellt, daß das Fleisch schon etwas komprimiert ist, so daß der Fleischstrom nur wenige oder keine Lücken aufweist. Durch eine einfache Geschwindigkeitsmessung (nicht dargestellt) wird die Geschwindigkeit, mit der das Fleisch im Bereich der Fettanalyse gefördert wird, ermittelt und damit der Volumenstrom des Fleisches bestimmt. Mit der Fettanalysevorrichtung wird gleichzeitig die Dichte des Fleischvolumenstroms bestimmt und dadurch der Fleischmassestrom ermittelt. Der Fachmann erkennt, daß die Fettanalysevorrichtung auch im Bereich der Schnecke 4, der Schneidvorrichtung, 5, zwischen den Vorrichtungen 4, 5 oder nach Vorrichtung 5 angeordnet sein kann. Ferner kann die Fettanalysevorrichtung auch im Bereich des Trichters 2 angeordnet sein.

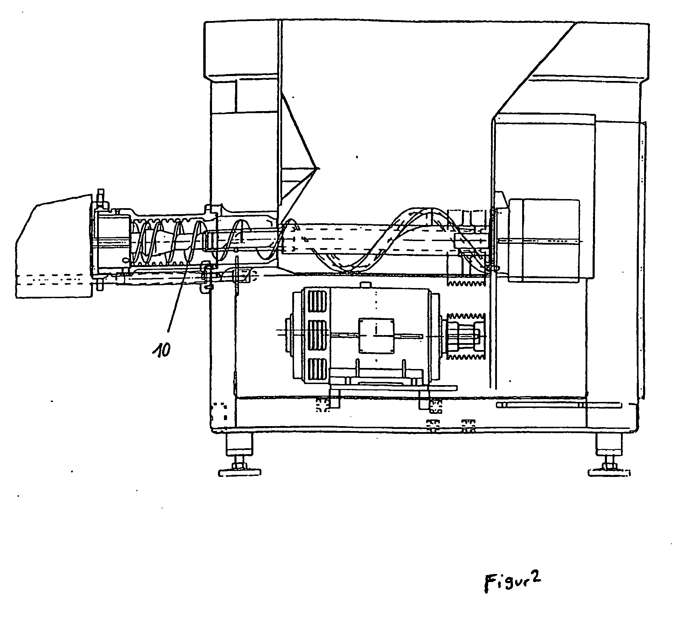

**Figur 2** zeigt einen Einschneckenwolf. Die Schnecke 10 fördert das Fleisch durch einen Schneidsatz (nicht dargestellt), in dem das Fleisch zerkleinert wird. Die Fettanalysevorrichtung (nicht dargestellt) kann im Bereich der Schnecke 10 oder bezogen auf die Materialflußrichtung danach angeordnet sein kann. Erfindungsgemäß ist jedoch wichtig, daß die Meßvorrichtung ein Teil des Einschneckenwolfes ist. Ferner kann die Fettanalysevorrichtung auch im Bereich des Einfülltrichters angeordnet sein.

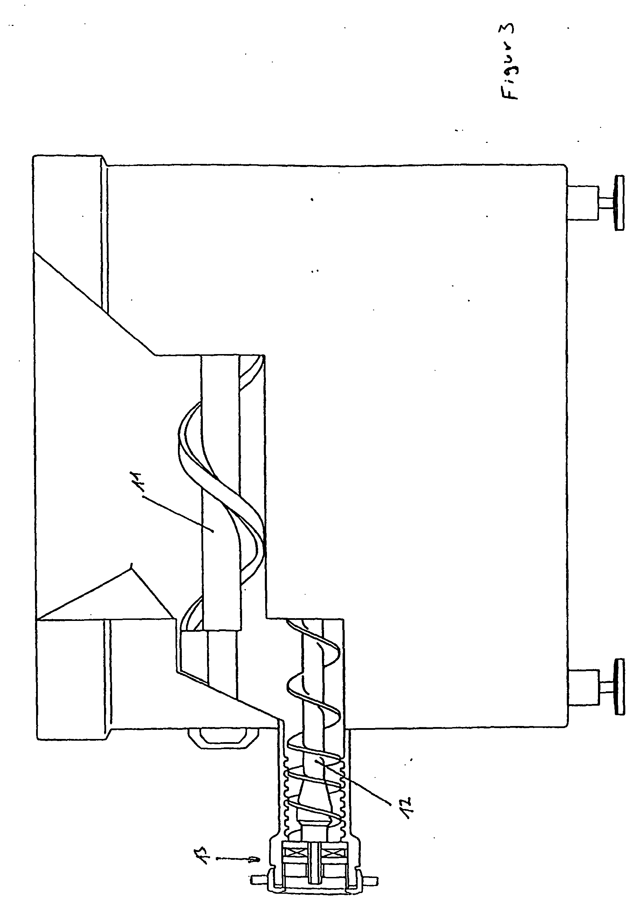

**Figur 3** zeigt einen Wolf mit zwei versetzten Schnecken 11, 12. Die Schnecken 11, 12 fördern das Fleisch durch einen Schneidsatz 13, in dem das Fleisch zerkleinert wird. Die Fettanalysevorrichtung (nicht dargestellt) kann im Bereich der Schnecken 11, 12 oder bezogen auf die Materialflußrichtung danach angeordnet sein. Erfindungsgemäß ist jedoch wichtig, daß die Meßvorrichtung ein Teil des Einschneckenwolfes ist. Ferner kann die Fettanalysevorrichtung auch im Bereich des Einfülltrichters angeordnet sein.

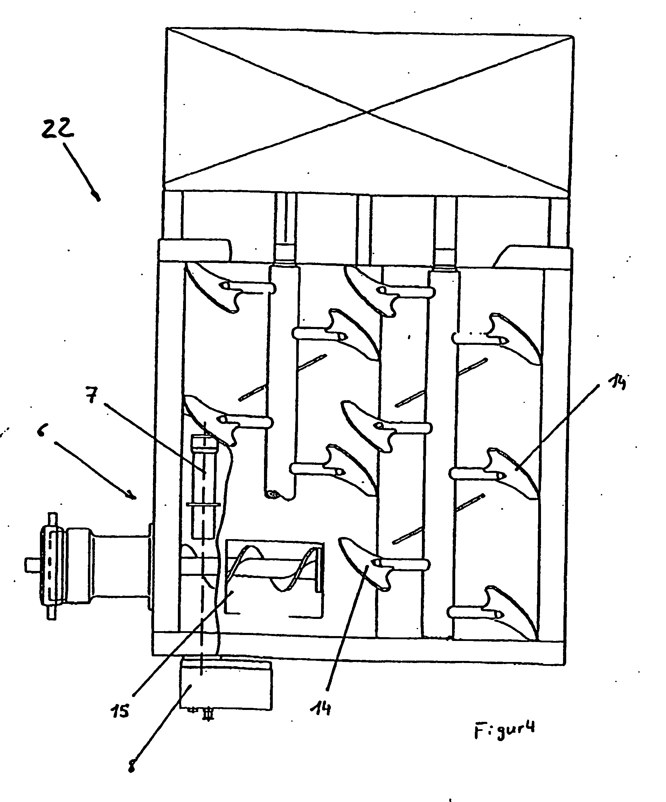

**Figur 4** zeigt einen Mischer 22 mit einer Vielzahl von Mischorganen 14 und einer Austragschnecke 15, mit der das gemischte Fleisch aus dem Mischer gefördert wird. Der Austragschnecke 15 kann noch eine Schneidvorrichtung (nicht dargestellt) nachgeordnet sein. Die Fettanalysevorrichtung 6 ist im Bereich der Schnecke 15 angeordnet und besteht aus einer Strahlungsquelle 7 und einem Strahlungsdetektor 8. Die Fettanalysevorrichtung 6 basiert in dem vorliegenden Fall auf Röntgenstrahlung. Der Fachmann erkennt, daß auch andere Meßprinzipien eingesetzt werden können. Bei Fettanalysevorrichtungen 6 im Bereich von bewegten Teilen ist wichtig, daß die Meßstrecke 18 zum Zeitpunkt der Messung nicht unterbrochen ist bzw. wenn die Meßstrecke 18 zum Zeitpunkt der Messung unterbrochen sein sollte, diese Meßwerte verworfen werden. Die Fettanalysevorrichtung 6 ist im Bereich der Schnecke 15 so angeordnet, daß sichergestellt ist, daß alles Fleisch, das den Mischer 22 verläßt, die Fettanalysevorrichtung 6 passiert. Das Fleisch ist zum Zeitpunkt der Messung schon etwas komprimiert, so daß der Fleischstrom nur wenige oder keine Lücken aufweist. Durch eine einfache Geschwindigkeitsmessung (nicht dargestellt) kann die Geschwindigkeit, mit der das Fleisch im Bereich der Fettanalyse 6 fließt, ermittelt und damit der Volumenstrom des Fleisches bestimmt werden. Mit der Fettanalysevorrichtung 6 wird gleichzeitig die Dichte des Fleischvolumenstroms bestimmt und dadurch der Fleischmassestrom ermittelt. Der Fachmann erkennt, daß die Fettanalysevorrichtung 6 auch in anderen Bereichen des Mischers 22 angeordnet sein kann.

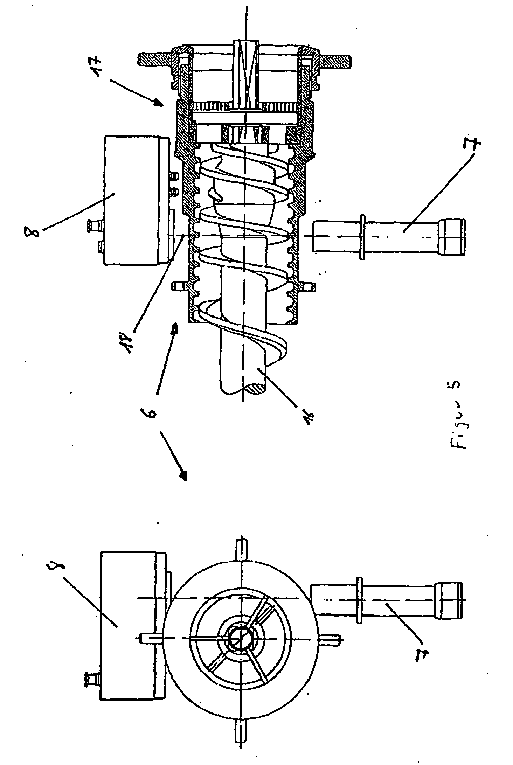

**Figur 5** zeigt eine Fettanalysevorrichtung 6 im Bereich einer Schnecke 16, beispielsweise eines Wolfes. Die Schnecke 16 fördert das Fleisch durch einen Schneidsatz 17. Die Fettanalysevorrichtung 6 besteht aus einer Strahlungsquelle 7 und einem Strahlungsdetektor 8. Der Meßstrahl ist durch die gestrichelte Linie 18 dargestellt. Die Fettanalysevorrichtung basiert in dem vorliegenden Fall auf Röntgenstrahlung. Der Fachmann erkennt, daß auch andere Meßprinzipien eingesetzt werden können. Bei Fettanalysevorrichtungen 6 im Bereich von bewegten Teilen ist wichtig, daß die Meßstrecke 18 zum Zeitpunkt der Messung nicht unterbrochen ist bzw. wenn die Meßstrecke 18 zum Zeitpunkt der Messung unterbrochen sein sollte, diese Meßwerte verworfen werden.

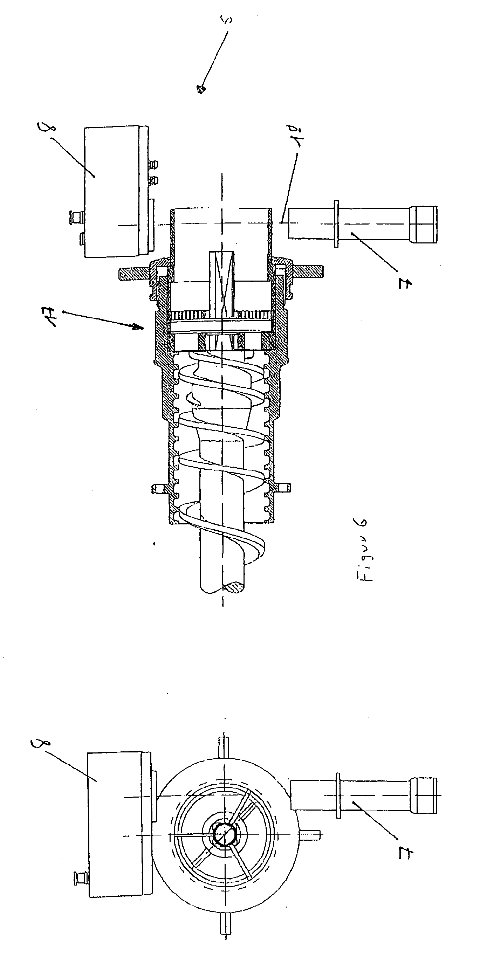

**Figur 6** zeigt eine Fettanalysevorrichtung, die der Schneidvorrichtung 17 gemäß Figur 5 nachgeordnet ist. Erfindungswesentlich ist jedoch, daß die Meßvorrichtung 6 noch Teil der Fleischverarbeitungsmaschine ist. Im übrigen wird auf die Ausführungen zu Figur 5 verwiesen.

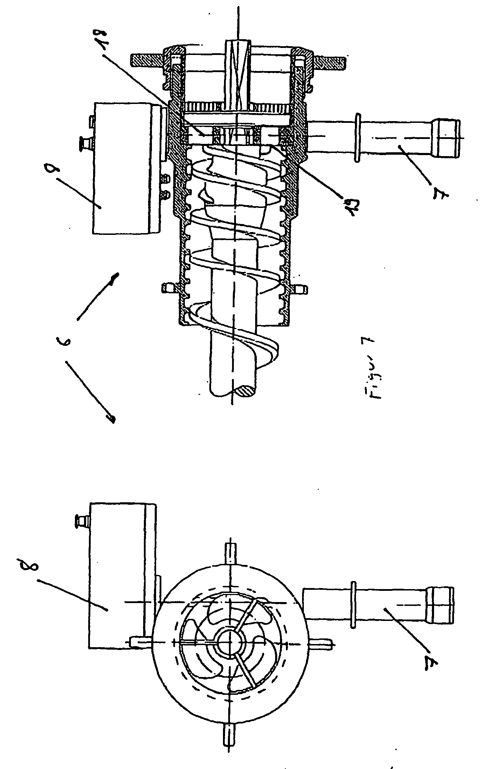

**Figur 7** zeigt eine Fettanalysevorrichtung 6 im Bereich der Zerkleinerungsvorrichtung 17. Die Zerkleinerungsvorrichtung weist unter anderem einen Vorschneide 19 auf, in dessen Bereich die Meßvorrichtung angeordnet ist. Im übrigen wird auf die Ausführungen zu den Figuren 5 und 6 verwiesen.

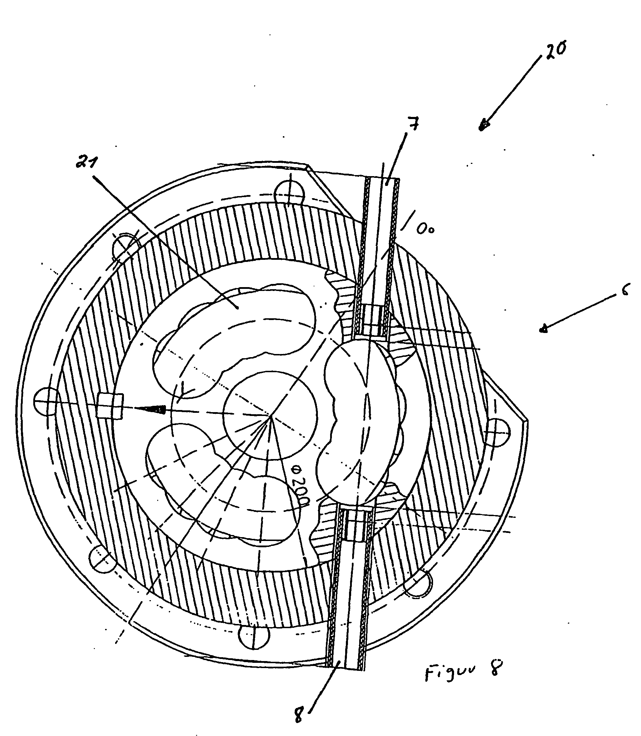

**Figur 8** zeigt eine weitere Fettanalysevorrichtung im Bereich eines Vorschneiders 20. Der Vorschneider weist drei oder mehrere Aussparungen 21 auf, durch die das Fleisch gepreßt wird. In einer dieser Aussparungen ist die Fettanalysevorrichtung 6 angeordnet, die aus einer Strahlenquelle 7 und einem Strahlungsdetektor 8 besteht. Da das Fleisch durch sehr enge Aussparungen mit einem klar definierten Querschnitt gepreßt wird, ist eine Volumen- oder Massenstrombestimmung sehr leicht möglich. In dem vorliegenden Fall wird die Meßstrecke auch nicht durch bewegte Teile durchschnitten. Diese Ausführungsform der erfindungsgemäßen Fleischverarbeitungsvorrichtung ist besonders kompakt und sehr einfach zu realisieren.

**Bezugszeichenliste:**

| 1 | Fleischverarbeitungsmaschine, Winkelwolf |
|---|---|
| 2 | Trichter |
| 3, 4, 10, 11, 12, 15, 16 | Schnecke |
| 5, 13, 17 | Schneidsatz, Zerkleinerungsvorrichtung |
| 6 | Fettanalysevorrichtung |
| 7 | Strahlungsquelle |
| 8 | Strahlungsdetektor |
| 9 | Gehäuse |
| 14 | Mischorgane |
| 18 | Messstrahl |
| 19, 20 | Vorschneider |
| 21 | Aussparungen des Vorschneiders |
| 22 | Mischer |

**Patentansprüche**

1. Fleischverarbeitungsmaschine (1), mit der frisches und/oder gefrorenes Fleisch zerkleinert, abgefüllt, entgast und/ oder gemischt wird, wobei sie eine Fettanalysevorrichtung (6) zur Bestimmung des Fettgehaltes im Fleisch aufweist, wobei die Fettanalysevorrichtung (6) im Bereich der Zerkleinerungsmaschine (17, 19, 20), der Schnecke/Schnecken (3, 4, 10, 11, 12, 15, 16) des Förderers, der Füllmaschine und/oder dem Mischer (22) vorgesehen ist, **dadurch gekennzeichnet, dass** die Fettanalysevorrichtung (6) auf Röntgenstrahlung, NIR und/oder NIT basiert und die Bestimmung des Fettgehaltes im Fleisch in einem Teilbereich der Fleischverarbeitungsmaschine (1) erfolgt, bei dem die Messstrecke (18) zumindest zeitweise nicht von sich bewegenden Metallteilen unterbrochen wird.

2. Fleischverarbeitungsmaschine (1) nach Anspruch 1, **dadurch gekennzeichnet, daß** sie zumindest ein Förderaggregat (3, 4, 10, 11, 12, 15, 16) und mindestens ein Zerkleinerungsaggregat (5, 13, 17, 19, 20) aufweist, wobei das Förderaggregat (3, 4, 10, 11, 12, 15, 16) das Fleisch durch das Zerkleinerungsaggregat (5,13.17.19. 20) preßt.

3. Fleischverarbeitungsmaschine (1) nach einem der vorherigen Ansprüche, **dadurch gekennzeichnet, daß** die Fettmessung im Bereich des Förderaggregates (3, 4, 10, 11, 12, 15, 16) oder zwischen Förderaggregat (3, 4, 10, 11, 12, 15, 16) und Zerkleinerungsaggregat (5, 13, 17, 19, 20) erfolgt.

4. Fleischverarbeitungsmaschine (1) nach einem der vorherigen Ansprüche, **dadurch gekennzeichnet, daß** die Fettmessung im Bereich des Zerkleinerungsaggregates (5, 13, 17, 19, 20) oder nach dem Zerkleinerungsaggregat (5, 13, 17, 19, 20) erfolgt.

5. Fleischverarbeitungsmaschine (1) nach Anspruch 4, **dadurch gekennzeichnet, daß** das Zerkleinerungsaggregat (5, 13, 17, 19, 20) mindestens einen Vorschneider (19, 20) und/oder eine Lochscheibe aufweist und daß die Messung im Bereich des Vorschneiders (19, 20) und/oder der Lochscheibe erfolgt.

6. Fleischverarbeitungsmaschine (1) nach Anspruch 5, **dadurch gekennzeichnet, daß** der Vorschneider (19, 20) oder die Lochscheibe mindestens eine Ausnehmung (21) aufweist und daß die Meßstrecke (18) in der Ausnehmung (21) angeordnet ist.

7. Fleischverarbeitungsmaschine (1) nach einem der Ansprüche 1 - 6, **dadurch gekennzeichnet, daß** die Bestimmung des Fettgehaltes bei einem Druck im Fleisch von mindestens 0,5 Bar, vorzugsweise mindestens 1 Bar erfolgt.

8. Fleischverarbeitungsmaschine (1) nach einem der Ansprüche 1-6. **dadurch gekennzeichnet, daß** die größte Abmessung der zu verarbeitenden Fleischstücke maximal 80 mm, vorzugsweise maximal 60 mm beträgt.

9. Fleischverarbeitungsmaschine (1) nach einem der Ansprüche 1-8, **dadurch gekennzeichnet, daß** sie zusätzlich eine Geschwindigkeitsmessung und/oder Volumenstrommessung aufweist.

10. Fleischverarbeitungsmaschine (1) nach Anspruch 9, **dadurch gekennzeichnet, daß** bei der Volumenstrommessung Lücken zwischen den Fleischstücken ausgeblendet werden.

11. Fleischverarbeitungsmaschine (1) nach einem der Ansprüche 1 -11, **dadurch gekennzeichnet, daß** mit der Fettanalysevorrichtung (6) auch die Dichte des Fleisches bzw. dessen Flächengewicht bestimmt wird.

12. Verfahren zur Bestimmung des Fettgehaltes in frischem oder gefrorenem Fleisch, wobei der Fettgehalt in einer Fleischverarbeitungsmaschine (1) während der Verarbeitung bestimmt wird, wobei die Fettanalysevorrichtung (6) im Bereich der Zerkleinerungsmaschine (17, 19, 20), der Schnecke/Schnecken (3, 4, 10, 11, 12, 15, 16) des Förderers, der Füllmaschine und/oder dem Mischer (22) vorgesehen ist, **dadurch gekennzeichnet, dass** die Messung mit Röntgenstrahlen, NIR und/oder NIT und in einem Teilbereich der Fleischverarbeitungsmaschine (1) erfolgt, bei dem die Messstrecke (18) zumindest zeitweise nicht von sich bewegenden Metallteilen unterbrochen wird.

13. Verfahren nach Anspruch 12, **dadurch gekennzeichnet, daß** die Verarbeitung Zerkleinern, Mischen und/oder Abfüllen ist.

14. Verfahren nach einem der Ansprüche 12 - 13, **dadurch gekennzeichnet, daß** die Geschwindigkeit, die Dichte und/oder der Volumenstrom des zu verarbeitenden Fleisches gemessen wird.

## Claims

1. A meat processing machine (1) for disintegrating, bottling, degassing, and/or mixing fresh and/or frozen meat, comprising a fat analyzing device (6) for determining the fat content of the meat, which fat analyzing device (6) is located in the region of the disintegrating machine (17, 19, 20), or of the conveyor screw(s) (3, 4, 10, 11, 12, 16, 16), or of the bottling machine, and/or of the mixer (22), **characterized in that** the fat analyzing device (6) implements X-rays, near infrared reflection (NIR), and/or near infrared transmission (NIT) and that the determination of the fat content of the meat takes place in a subregion of the meat processing machine (1) in which the line of measurement is at least intermittently not interrupted by moving metal parts.

2. A meat processing machine (1) as defined in Claim 1, **characterized in that** it comprises at least one conveyor unit (3, 4, 10, 11, 12, 15, 16) and at least one disintegrating unit (5, 13, 17, 19, 20), which conveyor unit forces the meat through said disintegrating unit.

3. A meat processing machine (1) as defined in either of the previous claims, **characterized in that** the fat measurement takes place in the region of said conveyor unit (3, 4, 10, 11, 12, 15, 16) or between said conveyor unit (3, 4, 10, 11, 12, 15, 16) and said disintegrating unit (5, 13, 17, 19, 20).

4. A meat processing machine (1) as defined in any one of the previous claims, **characterized in that** the fat measurement takes place in the region of said disintegrating unit (5, 13, 17, 19, 20) or downstream of said disintegrating unit.

5. A meat processing machine (1) as defined in Claim 4, **characterized in that** the disintegrating unit (5, 13, 17, 19, 20) comprises at least one cutting blade (19, 20) and/or a perforated disk, and that the fat measurement takes place in the region of said cutting blade(s) (19, 20) and/or in the region of said perforated disk.

6. A meat processing machine (1) as defined in Claim 5, **characterized in that** said cutting blade (19, 20) or said perforated disk has at least has one clearance (21) and the line of measurement (18) passes through said clearance (21).

7. A meat processing machine (1) as defined in any one of Claims 1 to 6, **characterized in that** the determination of the fat content is carried out with the meat under a pressure of 0.5 bar, preferably at least 1 bar.

8. A meat processing machine (1) as defined in any one of Claims 1 to 6, **characterized in that** the maximum size of a piece of meat to be processed is 80 mm, preferably 60 mm.

9. A meat processing machine (1) as defined in any one of Claims 1 to 8, **characterized in that** it comprises means for measuring the speed of transport and/or the volumetric flow rate.

**10.** A meat processing machine (1) as defined in Claim 9, **characterized in that** the gaps between the pieces of meat are omitted from the volumetric flow rate measurement.

**11.** A meat processing machine (1) as defined in any one of Claims 1 to 11, **characterized in that** the fat analyzing device is also capable of measuring the density of the meat, or its weight per unit area.

**12.** A method for determining the fat content of frozen or fresh meat, wherein the fat content is determined in a meat processing machine while the meat is being processed and said fat analyzing device is disposed in the region of the disintegrating unit (17, 19, 20), or of the conveyor screw(s) (3, 4, 10, 11, 12, 15, 16), or of the bottling machine, and/or of the mixer (22), **characterized in that** measurement is carried out using X-rays, MIR, and/or NIT in a subregion of the processing machine in which the line of measurement is at least intermittently not interrupted by moving metal parts.

**13.** A method as defined in Claim 12, **characterized in that** said processing consists of disintegrating, mixing and/or bottling.

**14.** A method as defined in either of Claims 12 to 13, **characterized in that** the speed of travel, the density and/or the volumetric flow rate of the meat being processed is measured.

**Revendications**

**1.** Machine de traitement de viande (1), permettant de hacher, remplir, dégazer et/ou mélanger de la viande fraîche et/ou congelée et présentant un dispositif d'analyse des graisses (6) pour déterminer la teneur en graisse de la viande, le dispositif d'analyse des graisses (6) étant prévu dans la région de la machine à hacher (17, 19, 20), de la ou des vis sans fin (3, 4, 10, 11, 12, 15, 16) du transporteur, de la machine de remplissage et/ou du mélangeur (22), **caractérisée en ce que** le dispositif d'analyse des graisses (6) utilise des rayons X, NIR et/ou NIT et la détermination de la teneur en graisse dans la viande s'effectue dans une région partielle de la machine de traitement de viande (1), dans laquelle la distance de mesure (18) est au moins temporairement non interrompue par les pièces métalliques en mouvement.

**2.** Machine de traitement de viande (1) selon la revendication 1, **caractérisée en ce qu'**elle présente au moins une unité de transport (3, 4, 10, 11, 12, 15, 16) et au moins une unité de hachage (5, 13, 17, 19, 20), l'unité de transport (3, 4, 10, 11, 12, 15, 16) pressant la viande à travers l'unité de hachage (5, 13, 17, 19, 20).

**3.** Machine de traitement de viande (1) selon l'une quelconque des revendications précédentes, **caractérisée en ce que** la mesure de la teneur en graisse s'effectue dans la région de l'unité de transport (3, 4, 10, 11, 12, 15, 16) ou entre l'unité de transport (3, 4, 10, 11, 12, 15, 16) et l'unité de hachage (5, 13, 17, 19, 20).

**4.** Machine de traitement de viande (1) selon l'une quelconque des revendications précédentes, **caractérisée en ce que** la mesure de la teneur en graisse s'effectue dans la région de l'unité de hachage (5, 13, 17, 19, 20) ou après l'unité de hachage (5, 13, 17, 19, 20).

**5.** Machine de traitement de viande (1) selon la revendication 4, **caractérisée en ce que** l'unité de hachage (5, 13, 17, 19, 20) présente au moins un précoupeur (19, 20) et/ou une plaque à trous et **en ce que** la mesure s'effectue dans la région du précoupeur (19, 20) et/ou de la plaque à trous.

**6.** Machine de traitement de viande (1) selon la revendication 5, **caractérisée en ce que** le précoupeur (19, 20) ou la plaque à trous présente au moins un évidement (21) et **en ce que** la distance de mesure (18) est située dans l'évidement (21).

**7.** Machine de traitement de viande (1) selon l'une quelconque des revendications 1 à 6, **caractérisée en ce que** la détermination de la teneur en graisses s'effectue à une pression dans la viande d'au moins 0,5 bar, de préférence d'au moins 1 bar.

**8.** Machine de traitement de viande (1) selon l'une quelconque des revendications 1 à 6, **caractérisée en ce que** la plus grande dimension des morceaux de viande à traiter mesure au maximum 80 mm, de préférence au maximum 60 mm.

9. Machine de traitement de viande (1) selon l'une quelconque des revendications 1 à 8, **caractérisée en ce qu'**elle présente en outre une mesure de vitesse et/ou une mesure de débit volumique.

10. Machine de traitement de viande (1) selon la revendication 9, **caractérisée en ce que** lors de la mesure du débit volumique, des espaces vides entre les morceaux de viande sont supprimés.

11. Machine de traitement de viande (1) selon l'une quelconque des revendications 1 à 10, **caractérisée en ce que** le dispositif d'analyse des graisses (6) détermine également la densité de la viande ou son poids superficiel.

12. Procédé pour déterminer la teneur en graisse de la viande fraîche ou congelée, dans lequel la teneur en graisse est déterminée pendant le traitement dans une machine de traitement de viande (1), le dispositif d'analyse des graisses (6) étant prévu dans la région de la machine à hacher (17, 19, 20), de la ou des vis sans fin (3, 4, 10, 11, 12, 15, 16) du transporteur, de la machine de remplissage et/ou du mélangeur (22), **caractérisé en ce que** la mesure s'effectue au moyen de rayons X, de NIR et/ou NIT, et dans une région partielle de la machine de traitement de viande (1), dans laquelle la distance de mesure (18) est au moins temporairement non interrompue par les pièces métalliques en mouvement.

13. Procédé selon la revendication 12, **caractérisé en ce que** le traitement est un hachage, un mélange et/ou un remplissage.

14. Procédé selon l'une quelconque des revendications 12 à 13, **caractérisé en ce que** la vitesse, la densité et/ou le débit volumique de la viande à traiter sont mesurés.

Figur 1

10

Figur2

Figur 3

Figur 4

Figur 5

Figur 6

Figur 7

EP 1 387 618 B1

Figur 8

16